# EUROPÄISCHE PATENTSCHRIFT

(11) **EP 0 892 733 B1**
(45) Veröffentlichungstag und Bekanntmachung des Hinweises auf die Patenterteilung: **02.06.2004**
(21) Anmeldenummer: 98902915.2
(22) Anmeldetag: 16.02.1998
(51) Int. Cl.: B62K 5/00, B62K 5/04, B62K 17/00, B62K 19/00

(54) **RAHMENKONSTRUKTION FÜR EIN MEHRPLÄTZIGES ZWEISPURIGES FAHRRAD**
FRAME STRUCTURE FOR A DOUBLE-AXLE BICYCLE FOR SEVERAL OCCUPANTS
STRUCTURE DU CADRE D'UNE BICYCLETTE A PLUSIEURS PLACES ET A DEUX ESSIEUX

(30) Priorität: 17.02.1997 CH 34697
(43) Veröffentlichungstag der Anmeldung: 27.01.1999
(73) Patentinhaber: Frey, Rudolf, 8008 Zürich (CH)
(72) Erfinder: Frey, Rudolf, 8008 Zürich (CH)
(74) Vertreter: Felber, Josef
(86) Internationale Anmeldenummer: PCT/CH1998/000059
(87) Internationale Veröffentlichungsnummer: WO 1998/035871

(56) Entgegenhaltungen:
- DE-U- 9 210 687
- DE-U- 29 610 421
- FR-A- 2 281 265
- NL-A- 9 002 823

## Beschreibung

Die vorliegende Erfmdung betrifft eine Rahmenkonstruktion für ein mehrplätziges zweispuriges Fahrrad. Mehrplätzige zweispurige Fahrräder sind bekannt. Man kennt die dreirädrigen Fahrzeug-Rikschas, welche als Fahrrad-Taxis eingesetzt werden. Es können damit zwei Fahrgäste befördert werden, wobei der Fahrer alleine die Tretarbeit verrichten muss. Die Fahrrad-Rikscha weist eine starke Rahmenkonstruktion auf, ist entsprechend schwer und deshalb nur auf ebenem Gelände einsetzbar. Steigungen können vollbesetzt kaum überwunden werden. Bekannt sind auch dreirädrige Fahrräder für jeweils eine Person. Es handelt sich im Prinzip um gewöhnliche Fahrräder, die hinten eine Achse mit zwei Rädern aufweisen, sodass auch ältere oder körperbehinderte Leute, ohne die Balance halten zu müssen, Fahrrad fahren können. Allerdings ist ein Dreirad, das nur von einer Person bewegt wird, relativ schwer, da doch ein zusätzliches Rad und eine zusätzliche Rahmenkonstruktion viel zum Fahrzeuggewicht beitragen. Bekannt sind auch Transportfahrräder oder Verkaufsfahrräder für zum Beispiel Eis, Getränke und Süssigkeiten, die einen Vorderwagen mit zwei parallel zueinander an einer Achse angeordneten Rädern aufweisen, zwischen denen ein Behälter oder eine Ladefläche Platz findet. Der ganze Vorderwagen ist gelenkig um die Hochachse mit dem hinteren Rahmenteil verbunden, welcher im wesentlichen den Hinterteil eines herkömmlichen Fahrrades bildet. Bekannt sind auch vierrädrige Fahrräder für zwei Personen. Diese bestehen meist aus zwei konventionellen, nebeneinander angeordneten Fahrrädern, welche mittels besonderer Querverstrebungen zu einem Fahrzeugrahmen zusammengeschweisst sind. Ausserdem sind die beiden Vorderräder an einem Parallelogramm geführt, welches dem Umstand Rechnung trägt, dass der innere Kurvenradius kleiner als der äussere ist. Solche Fahrräder werden häufig als Strandfahrräder und Plauschfahrräder eingesetzt, sind jedoch zum Ueberwinden grösserer Strecken kaum geeignet. Der Grund dafür liegt darin, dass sie keine gesonderte Rahmenkonstruktion aufweisen, sondern bloss zwei Rahmen miteinander verbunden sind, sodass pro Fahrer mehr Gewicht befördert werden muss als wenn jeder nur sein eigenes Fahrrad bewegen müsste. Es sind auch Strandfahrräder bekannt, die jedoch fast eher einem Tret-Automobil gleichen und eine schwere Chassis-Konstruktionen aufweisen. Bei diesen Tret-Mobilen geht es mehr um den Reiz der Einmaligkeit, den man durch Mieten dieser Tret-Fahrzeuge erleben kann. Weil die Fahrzeuge in der Regel Mietobjekte sind, werden sie auch entsprechend robust und schwer konstruiert, um dauerhaft zu sein. Dafür sind sie aber nicht auf Effizienz bezüglich der Biomechanik ausgelegt und können kaum als effiziente Fortbewegungsmittel bezeichnet werden.

Aus DE 296 10 421 U1 ist ein Mehrspurfahrrad bekannt geworden, welches eine spezielle Rahmenkonstruktion aufweist, die bei hoher Fahrstabilität eine leichtere Handhabung des Fahrzeuges ermöglichen soll. Vorallem soll das Auf- und Absteigen vom Fahrzeug erleichert werden. Hierzu ist ein Rahmenteil in einer Draufsicht in seiner Grundform U-förmig ausgebildet, wobei die U-Basis als Basislängsträger etwa in Fahrradlängsrichtung ausgerichtet ist. Ein vorderer U-Schenkel bildet dabei als vorderer Querträger den Vorderradträger und ein hinterer U-Schenkel als hinterer Querträger den Hinterradträger. Diese Rahmenkonstruktion schafft durch ihre seitlich offene U-Form einen ebenerdig begehbaren Freiraum vor dem Fahrradsitz. Damit kann einfach und bequem, ohne ein Übersteigen von Rahmenteilen, aufgesessen und wieder abgestiegen werden.

Die Aufgabe der vorliegenden Erfindung ist es demgegenüber, eine Rahmenkonstruktion für ein mehrplätziges zweispuriges Fahrrad zu schaffen, welche im Betrieb des Fahrrades eine besonders grosse biomechanische Effizienz aufweisen soll. Die Konstruktion soll so einfach und leicht wie möglich sein und den Bau eines Fahrrades für mindestens zwei, vorzugsweise jedoch für vier Personen ermöglichen. Bei der Variante für vier Personen ist insbesondere an eine Konstruktion für eine vierköpfige Familie gedacht, also für zwei Erwachsene und zwei Kinder. Entsprechend können in diesem Fall zwei der vier Sitzplätze für kleinere Körpergrössen konzipiert sein. Ziel der Konstruktion ist es, mit einer solchen Rahmenkonstruktion den Bau eines Fahrrades zu ermöglichen, mit dem eine vierköpfige Familie Tagesausflüge oder sogar mehrtägige Ferienreisen unternehmen kann.

Diese Aufgabe wird gelöst von einer Rahmenkonstruktion für ein mehrplätziges, zweispuriges Fahrrad mit zwei in Fahrzeug-Längsrichtung nebeneinander liegend und zueinander hin geneigt angeordneten Rohrbogen, die über einen Bogenabschnitt miteinander verbunden sind, wobei die vorderen und die hinteren Bogenenden in je ein quer zur Fahrzeug-Längsrichtung verlaufendes Rohr münden, und dass diese beiden Rohre über zwei parallel zueinander in Fahrzeug-Längsrichtung verlaufende Rohre auf Zug verstrebt sind.

Anhand der Zeichnungen wird ein Ausführungsbeispiel dieser Rahmenkonstruktion gezeigt und diese wird in der nachfolgenden Beschreibung im einzelnen vorgestellt und ihr Aufbau wird erläutert.

Es zeigt:
- Figur 1:: Die Rahmenkonstruktion in einer Seitenansicht;
- Figur 2:: Die Rahmenkonstruktion im Grundriss;
- Figur 3:: Die Rahmenkonstruktion von hinten gesehen.

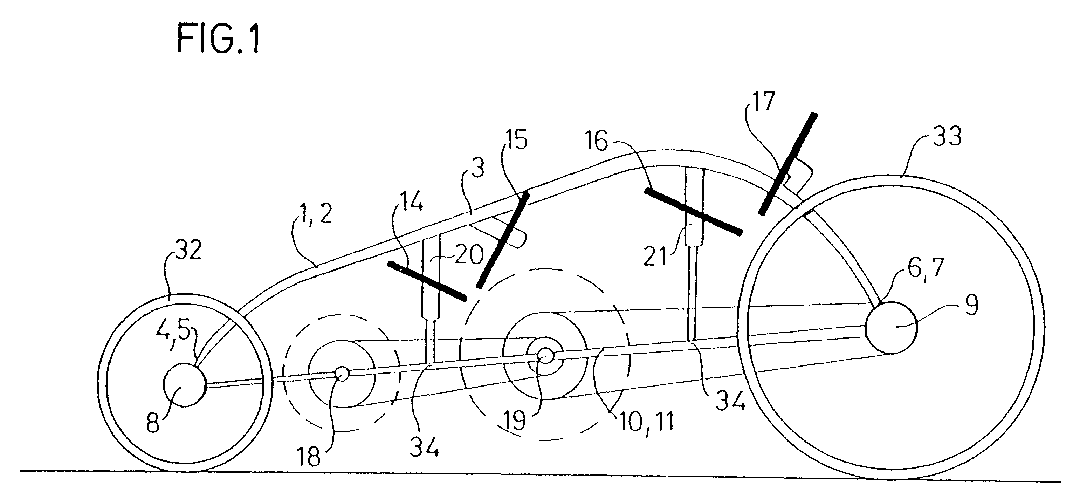

Die Figur 1 zeigt die Rahmenkonstruktion von der Seite her gesehen. Sie weist zwei in Fahrzeug-Längsrichtung nebeneinander liegende und zueinander hin geneigt angeordnete Rohrbogen 1,2 auf. In der hier gezeigten Seitenansicht ist allerdings nur der Rohrbogen 1 auf der linken Fahrzeugseite sichtbar. Dieser Rohrbogen 1 hat eine ähnliche Form wie eine Bogensäge. Der Grundgedanke dabei ist, dass die auf die Bogenkonstruktion wirkenden Schwerkräfte der auf dem Fahrzeug sitzenden Personen in Kräfte umgelenkt werden, welche die beiden Bogenenden 4;6 auseinanderdrückt. Diese umgelenkten Kräfte werden dann ihrerseits wieder aufgefangen von je einem Rohr 10,11 welches in Längsrichtung des Fahrzeuges angeordnet ist und die Enden des Bogens 1,2 indirekt verbindet, um die dazwischen wirkenden Zugkräfte aufzunehmen. Im hier gezeigten Beispiel mündet das vordere Bogenende 4 in die Vorderachse 8 und das hintere Bogenende 6 in die Hinterachse 9. An dieser läuft hier ein gegenüber dem Vorderrad 32 grösseres Hinterrad 33. Weiter ist hier der Bogenradius am hinteren Bogenteil grösser als jener am vorderen Bogenteil, sodass die ganze bogenförmige Rahmenkonstruktion insgesamt leicht nach vorne geneigt ist. Der Bogen 1 ist über einen Abschnitt 3 gerade. In diesem geraden Abschnitt 3 ist er mit dem entsprechenden geraden Abschnitt 3 seines benachbarten und hier nicht sichtbaren Bogens 2 verbunden. Am Bogen angebaut sind in diesem Ausführungsbeispiel ausserdem die Sitze 14,16 und die dazugehörigen Lehnen 15,17. Die Vordersitze 14 sind wegen der geneigten Lage des Bogens 1,2 sowie seiner Formgebung und der ungleichgrossen Räder 32,33 in einer tieferen Position als die hinteren Sitze 16 angeordnet, jedoch auch zur Aufnahme von Erwachsenen geeignet. Sie können aber auch für Personen mit kleinerer Körpergrösse konzipiert sein, namentlich für Kinder. Die Erwachsenen oder Eltern der Kinder nehmen in diesem Fall hinten Platz und können dabei während der Fahrt die Kinder permanent überwachen. Die Sitze 14,16 sowohl vorne wie hinten sind mittels zusätzlicher Verstrebungen 20,21 mit den beiden längsverlaufenden Bogen 1,2 sowie den längs verlaufenden Rohren 10,11 abgestützt. Das in Längsrichtung verlaufende Rohr 10 nimmt nebst den infolge der Schwerkraft der Fahrer auf die Bogenenden 4,6 wirkenden Zugkräfte auch noch die Tretlager 18,19 mit den Kurbeln auf, und damit die beim Treten der Kurbeln entsprechend auf tretenden Reaktionskräfte. Im gezeigten Beispiel ist der Kurbelkreis der vorderen Tretkurbeln kleiner als jener der hinteren. Das ist ein Tribut an die Personen kleinerer Körpergrösse, die auf den vorderen Sitzen Platz nehmen. Bei einer Ausführung für vier etwa gleichgrosse Personen sind die Kurbelkreise gleichgross. Die mit der Rahmenkonstruktion ermöglichten Sitzpositionen gehen in Richtung Liegevelo. Die Reaktionskräfte beim Treten, welche nicht mehr alleine vom Körpergewicht aufgenommen werden können, wie das beim konventionellen Fahrrad der Fall ist, werden in diesem Fall teilweise von den Rücklehnen 15,17 der Sitze 14,16 aufgenommen. Diese Tatsache machte es auch möglich, dass die Lenkeinrichtung keine Gegenkräfte aufnehmen muss, wie das bei einem konventionellen Fahrrad der Fall ist. Für die lenkbaren Vorderräder 32 kann vielmehr ein Gestänge eingesetzt werden, das bloss noch über ein zentrales Steuerelement betatigt wird, das auf dem geraden Abschnitt 3 der beiden Bogen 1,2 angeordnet sein kann, in bequemer Lage zum Ergreifen und Halten durch einen der auf den hinteren Sitzen fahrenden Personen.

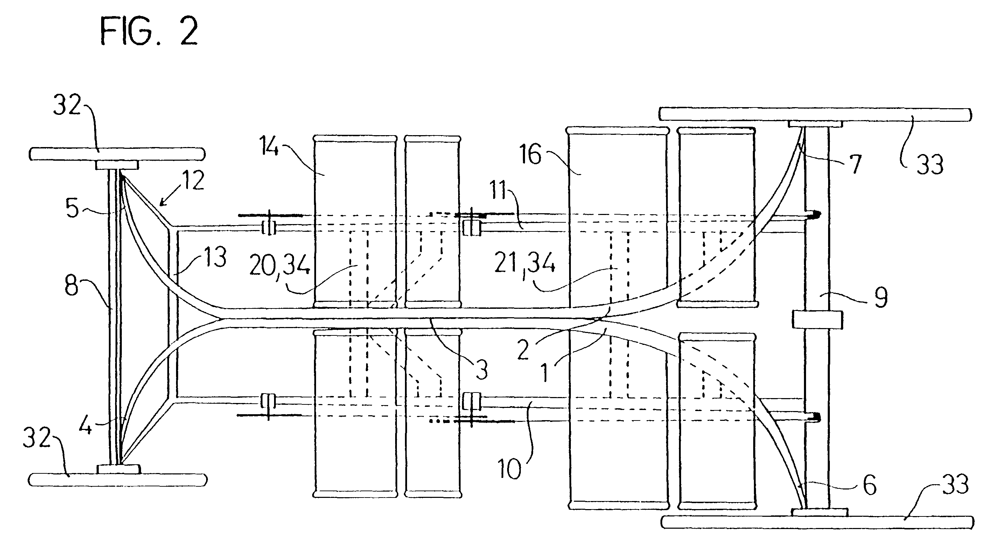

Die Figur 2 zeigt dieselbe Konstruktion von oben gesehen. Die beiden Bogen 1,2 sind zueinander hin geneigt angeordnet und bilden damit in Längsrichtung gesehen einen Giebel. Die von den Körpergewichten der Fahrer von oben auf diese Konstruktion wirkenden Kräfte werden somit nicht nur wie schon beschrieben in Zugkräfte zwischen den vorderen und hinteren Bogenenden 4,5;6,7 umgelenkt, sondern auch in Zugkräfte zwischen den beiden vorderen 4,5 und den beiden hinteren Bogenenden 6,7. Diese Bogenenden 4,5;6,7 münden hier direkt an die Vorder- 8 und Hinterachse 9. Es sind entsprechend diese Achsen 8,9, welche die zwischen jeweils den beiden Vorder- 4,5 und den beiden Hinterenden 6,7 der Bogen 1,2 wirkenden Zugkräfte aufnehmen. Die Zugkräfte zwischen der Vorder- 8 und der Hinterachse 9 andrerseits werden wie schon beschrieben von den beiden in Längsrichtung verlaufenden geraden Rohren 10,11 aufgenommen. Hinten führen diese Rohre 10,11 direkt an die Hinterachse 9, während sie vorne an die Enden der kürzeren Seite 13 eines Trapezes 12 führen, welches in derselben Ebene liegt wie die beiden Rohre 10,11 und dessen längere Trapezseite von der Vorderachse 8 gebildet ist. Die Sitze 14,16 können an einer eigenen Bogenkonstruktion 20,21 befestigt sein, die sich quer zur Fahrzeuglängsrichtung erstreckt. Der entsprechende Bogen 20,21 fangt dabei von einem der beiden geraden Rohre 10 an, führt weiter unter den beiden Längsbogen 1,2 hindurch und wieder hinunter auf das benachbarte gerade Rohr 11. Er kann seinerseits an seinen beiden unteren Enden eine Verbindung 34 aufweisen, um die zwischen seinen beiden Enden wirkenden Zugkräfte aufzunehmen, wobei diese Verbindung ein starres Rohr aber auch ein Stahlseil sein kann, was aus Gewichtsgründen noch interessanter ist.

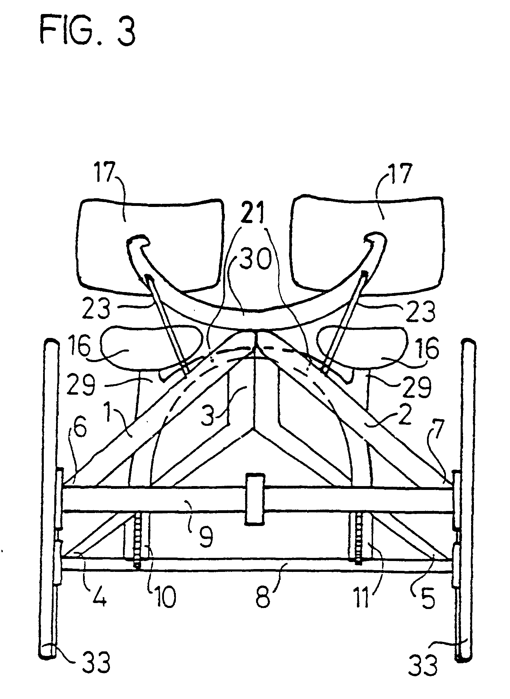

In Figur 3 ist die Rahmenkonstruktion noch in einer Ansicht von hinten gezeigt. Die einzelnen Sitze, hier am Beispiel der hinteren Sitze 16 gezeigt, sind von Querbögen 21 getragen, auf denen sie verstellbar angeordnet sind, wozu zum Beispiel Sattelrohre 29 auf beiden Seiten oben an den Querbögen 21 angeschweisst sein können. Die zugehörigen Sitzlehnen 17 sind an Halterungen 30 befestigt, die ihrerseits direkt an den Längsbogen 1,2 befestigt sind und je eine schräge Strebe 23 nach hinten zu einem weiteren Punkt auf dem jeweiligen Längsbogen 1,2 aufweisen können, um die auf die Sitzlehnen 17 wirkenden Reaktionskräfte auf den entsprechenden Bogen 1,2 zu lenken.

Diese Rahmenkonstruktion weist ein sehr geringes Gewicht gemessen am Gewicht der zu befördernden Personen auf, jedenfalls erheblich weniger als das Gewicht von vier Fahrrädern. Ausserdem ist die Sitzposition im Vergleich zu einem Fahrrad deutlich tiefer gelegt, wodurch der Schwerpunkt des ganzen Fahrzeuges ebenfalls tiefer liegt. Bei herkömmlichen Dreirädern ist gerade der hohe Schwerpunkt für die Kurvenfahrt nicht ungefährlich. Hier jedoch hat man fast zwei Liegefahrräder nebeneinanderliegend angeordnet, wobei aber die zwei Rahmen der beiden Liegefahrräder zu einer intelligenten Rahmenkonstruktion zusammengefasst sind, wodurch eine grosse Gewichtseinsparung bei hinreichender Stabilität ermöglicht wird. Infolge des geringen Gewichtes, der geringen Reibungsverluste von bloss vier Rädern für vier Personen und weiter infolge der niedrigen und komfortablen Sitzposition für die Tretarbeit ergeben sich optimale biomechanische Verhältnisse. Wegen der Sitzposition von jeweils zwei Personen hintereinander und ihrer gleichzeitig niedrigen Sitzposition ergibt sich eine kleine Stirnfläche, was sich sehr günstig auf den zu überwindenden Luftwiderstand auswirkt. Die Stirnfläche ist sehr viel kleiner als etwa jene von vier konventionellen Fahrradfahrem. Die Rahmenkonstruktion ermöglicht daher eine grosse biomechanische Effizienz. Bei einer vierköpfigen Familie zum Beispiel wird der Aktionsradius nicht zuletzt deswegen gesteigert, weil nicht mehr das schwächste Mitglied der Familie das Tempo und die Reichweite bestimmt, sondern die Reisenden eine unzertrennliche Teamarbeit verrichten und entsprechend ein Gemeinschaftserlebnis erfahren. Für mehrtägige Reisen kann der Raum über der Hinterachse 9 mit einem abschliessbaren Stauraum ausgerüstet werden. Zusätzlich ist das Ziehen eines Fahrrad-Anhängers möglich.

### Ziffernverzeichnis

- 1: Rohrbogen links
- 2: Rohrbogen rechts
- 3: Gerader Bogenabschnitt
- 4: Vorderes Bogenende links
- 5: Vorderes Bogenende rechts
- 6: Hinteres Bogenende links
- 7: Hinteres Bogenende rechts
- 8: Vorderachse
- 9: Hinterachse
- 10: Längsrohr links
- 11: Längsrohr rechts
- 12: Trapezkonstruktion
- 13: kürzere Trapezseite
- 14: Sitze vorne
- 15: Lehnen vorne
- 16: Sitze hinten
- 17: Lehnen hinten
- 18: Tretlager vorne
- 19: Tretlager hinten
- 20: Verstrebung Vordersitze
- 21: Verstrebung Hintersitze
- 22: Verstrebung Vorderlehne
- 23: Verstrebung Hinterlehne
- 24: Hinterrad links
- 25: Hinterrad rechts
- 26: Antriebseinheit links
- 27: Antriebseinheit rechts

- 29: Sitzstütze
- 30: Sitzlehnenhalterung

- 32: Vorderrad
- 33: Hinterrad
- 34: Verbindung Ende der Sitzbogen

## Patentansprüche

1. Rahmenkonstruktion für ein mehrplätziges, zweispuriges Fahrrad mit zwei in Fahrzeug-Längsrichtung nebeneinander liegend und zueinander hin geneigt angeordneten Rohrbogen (1,2), die über einen Bogenabschnitt (3) miteinander verbunden sind, wobei die vorderen (4,5) und die hinteren Bogenenden (6,7) in je ein quer zur Fahrzeug-Längsrichtung verlaufendes Rohr (8,9) münden, und dass diese beiden Rohre (8,9) über zwei parallel zueinander in Fahrzeug-Längsrichtung verlaufende Rohre (10,11) auf Zug verstrebt sind.

2. Rahmenkonstruktion nach Anspruch 1, **dadurch gekennzeichnet, dass** die vorderen Bogenenden (4,5) in die Vorder- (8) und die hinteren Bogenenden (6,7) in die Hinterachse (9) münden, und dass die so in eine Achse (8,9) mündenden Bogenenden (4,5;6,7) gegeneinander mittels der betreffenden Achse (8,9) auf Zug verstrebt sind.

3. Rahmenkonstruktion nach einem der vorhergehenden Ansprüche, **dadurch gekennzeichnet, dass** die vorderen Bogenenden (4,5) in die Vorder- (8) und die hinteren Bogenenden (6.7) in die Hinterachse (9) münden, und dass an die Vorderachse (8) nach hinten anschliessend eine liegende Trapezkonstruktion (12) angebaut ist, wobei die Vorderachse (8) die längere Trapezseite (8) bildet, und die Enden der kürzeren Trapezseite (13) mit zwei zueinander parallel verlaufenden geraden Rohren (10,11) verbunden sind, welche zur Hinterachse (9) führen und mit dieser je in einem Abstand von etwa einem Viertel ihrer Länge, von ihren äusseren Enden aus gemessen, verbunden sind.

4. Rahmenkonstrukton nach einem der vorhergehenden Ansprüche, **dadurch gekennzeichnet, dass** die Rohrbogen (1,2) über je einen Abschnitt (3) gerade sind und in diesem Abschnitt (3) miteinander verbunden sind.

5. Rahmenkonstruktion nach einem der vorhergehenden Ansprüche, **dadurch gekennzeichnet, dass** an den Rohrbogen (1,2) beidseits je ein Sitz (16) mit Lehne (17) angebaut ist, und dass das unter dem betreffenden Rohrbogen (1,2) in Längsrichtung verlaufende gerade Rohr (10,11) zu jedem über ihm angeordneten Sitz (16) ein Tretlager (19) aufweist.

6. Rahmenkonstruktion nach einem der Ansprüche 1 bis 5, **dadurch gekennzeichnet, dass** an den Rohrbogen (1,2) beidseits je zwei Sitze (14,16) mit Lehne (15,17) angebaut sind, und dass das unter dem betreffenden Rohrbogen (1,2) in Längsrichtung verlaufende gerade Rohr (10,11) zu beiden über ihm angeordneten Sitzen (14,16) ein Tretlager (18,19) aufweist.

7. Rahmenkonstruktion nach einem der Ansprüche 5 oder 6, **dadurch gekennzeichnet, dass** die an den Rohrbogen (1,2) angebauten Sitze (14,16) über eine Verstrebung (20,21) an den längs verlaufenden geraden Rohren (10,11) abgestützt sind.

8. Rahmenkonstruktion nach einem der vorhergehenden Ansprüche, **dadurch gekennzeichnet, dass** der Radius der Rohrbogen (1,2) hinten grösser ist als vorne, sodass die Sitzposition der hinteren Sitze (16) höher als jene der vorderen Sitze (14) liegt.

## Claims

1. Frame structure for a double-axle polycycle for several occupants with two adjacent bent pipes (1,2) which extend in the longitudinal direction of the vehicle and are inclined towards each other and are joined together along a section (3) of each other, whereby the front ends (4,5) and the rear ends (6,7) of the bent pipes each join up into a pipe (8,9) which extends crosswise to the longitudinal direction of the vehicle, and that these two pipes (8,9) are braced against each other in respect of traction by two pipes (10,11) which are arranged parallel to each other and extend in the longitudinal direction of the vehicle.

2. The frame structure of claim 1, **characterized in that** the front bent pipe ends (4,5) join up with the front axle (8) and the rear bent pipe ends (6,7) join up with the rear axle (9), and **in that** the ends (4,5;6,7) of the bent pipes that join up in this manner with an axle (8,9) are braced against each other in respect of traction by means of the corresponding axle (8,9).

3. The frame structure of one of the preceding claims, **characterized in that** the front ends (4,5) of the bent pipes join up with the front axle (8) and the rear ends (6,7) of the bent pipe join up with the rear axle (9), and **in that** a flat trapezium structure (12) is constructed on the back of the front axle (8), with the front axle (8) forming the longer trapezium side (8), and the ends of the shorter trapezium side (13) being connected with two straight, parallel pipes (10,11) which run up to the rear axle (9) and are each connected to it at a distance from its outer ends equal to approximately a quarter of its length.

4. The frame structure of one of the preceding claims, **characterized in that** the bent pipes (1,2) are each straight along one section (3), and are connected to each other along this section (3).

5. The frame structure of one of the preceding claims, **characterized in that** one seat (16) with a backrest (17) is mounted on either side of the bent pipes (1,2), and **in that** the straight pipe (10,11) running in the longitudinal direction under the respective bent pipe (1,2) has a bottom bracket bearing (19) assigned to each seat (16) located above it.

6. The frame structure of one of claims 1 to 5, **characterized in that** two seats (14,16) with backrests (15,17) are mounted on either side of bent pipes (1,2), and **in that** the straight pipe (10,11) running in the longitudinal direction under the respective bent pipe (1,2) has bottom bracket bearings (18,19) assigned to both seats (14,16) located above them.

7. The frame structure of one of claims 5 or 6, **characterized in that** the seats (14,16) mounted on the bent pipes (1,2) are supported on the longitudinally extending straight pipes (10,11) by a strut (20,21).

8. The frame structure according to one of the preceding claims, **characterized in that** the radius of the bent pipes (1,2) is greater at the rear than at the front, so that the seated position of the rear seats (16) is higher than that of the front seats (14).

## Revendications

1. Construction en châssis pour un cycle à plusieurs places et à deux voies, comportant deux arcs tubulaires (1, 2), disposés l'un à côté de l'autre dans le sens de la longueur du véhicule et penchés l'un vers l'autre, ces arcs étant reliés entre eux par un tronçon d'arcs (3), les extrémités avant (4, 5) et arrière (6, 7) d'arcs débouchent chacune dans un tube (8, 9) perpendiculaire au sens longitudinal du véhicule et ces deux tubes (8, 9) sont rigidifiés à la traction par deux tubes (10, 11), parallèles entre eux dans le sens de la longueur du véhicule.

2. Construction en châssis suivant la revendication 1, **caractérisée en ce que** les extrémités avant (4, 5) de tubes débouchent dans l'axe avant (8), que les extrémités arrière (6, 7) de tubes débouchent dans l'axe arrière (9) et que les extrémités 4, 5 ; 6, 7) de tubes débouchant ainsi dans un axe (8, 9) sont rigidifiées entre elles à la traction au moyen de l'axe correspondant (8, 9).

3. Construction en châssis suivant une des revendications précédentes, **caractérisée** en que les extrémités avant (4, 5) de tubes débouchent dans l'axe avant (8) et les extrémités arrière (6, 7) de tubes débouchent dans l'axe arrière (9), et que sur l'axe avant (8) il est rapporté une construction trapézoïdale (12) se raccordant vers l'arrière, cependant que l'axe avant (8) forme le côté le plus long (8) du trapèze et que les extrémités du côté le plus court (13) du trapèze sont reliées à deux tubes droits (10, 11) parallèles entre eux, qui mènent à l'axe arrière (9) et qui sont reliés à celui-ci, avec un espacement chaque fois d'environ un quart de leur longueur, mesuré à partir de leurs extrémités extérieures.

4. Construction en châssis suivant une des revendications précédentes, **caractérisée** en que les arcs tubulaires (1, 2) sont droits chacun sur un tronçon (3) et qu'ils sont reliés entre eux sur ce tronçon.

5. Construction en châssis suivant une des revendications précédentes, **caractérisée** en que sur les arcs tubulaires (1, 2) il est rapporté de chaque côté un siège (16) à dossier (17) et que le tube droit (10, 11) s'étendant sous l'arc tubulaire correspondant (1, 2) dans le sens longitudinal comporte pour chaque siège (16) disposé au-dessus de lui un pédalier (19).

6. Construction en châssis suivant une des revendications 1 à 5, **caractérisée** en que sur les arcs tubulaires (1, 2) sont rapportés de chaque côté deux sièges (14, 16) à dossiers (15, 17) et que le tube droit (10, 11) s'étendant sous l'arc tubulaire correspondant (1, 2) dans le sens longitudinal comporte pour les deux sièges (14, 16) disposés au-dessus de lui un pédalier (18, 19).

7. Construction en châssis suivant une des revendications 5 ou 6, **caractérisée** en que les sièges 14, 16) rapportés sur les arcs tubulaires (1, 2) s'appuient par un dispositif de raidissement (20, 21) sur les tubes droits longitudinaux (10,11).

8. Construction en châssis suivant une des revendications précédentes, **caractérisée** en que le rayon des arcs tubulaires (1, 2) est plus grand à l'arrière qu'à l'avant, de sorte que la position assise sur les sièges arrière (16) est plus haute que sur les sièges avant (14).
